# EUROPEAN PATENT APPLICATION

(11) **EP 4 707 965 A1**
(43) Date of publication of application: **11.03.2026**
(21) Application number: 25187436.8
(22) Date of filing: 04.07.2025
(51) Int. Cl.: G05B 19/00, G05B 23/02

(54) **HEAT EXCHANGER SENSOR PROCESSING METHOD AND APPARATUS**

(30) Priority: 06.09.2024 US 202418826669
(71) Applicant: General Electric Company, Cincinnati, Ohio 45215 (US)
(72) Inventor: WISEMAN, Matthew William, Evendale, 45215 (US); HEDRICK, Elijah Ballard, Niskayuna, 12309 (US); SIEFKE, Jeffrey Charles, Evendale, 45215 (US); TOLEDANO, David Sterling, Niskayuna, 12309 (US)
(74) Representative: Openshaw & Co.

(57) **Abstract**

Sensor information from a plurality of sensors (104, 105) that monitor a heat exchanger (103) is accessed and then sensed information that corresponds to that sensor information is input into a control circuit (101) configured to output virtual parameters corresponding to the heat exchanger as a function, at least in part, of the sensed information. A particular fault class is determined from amongst a plurality of fault classes as a function, at least in part, of the virtual parameters and at least one task is identified regarding the heat exchanger that corresponds to the particular fault class.

## Description

### GOVERNMENT INTERESTS

This invention was made with United States Government support. The Government has certain rights to this invention.

### TECHNICAL FIELD

These teachings relate generally to apparatuses and more particularly to apparatus sensor information processing.

### BACKGROUND

Many apparatuses comprise multi-part/multi-component mechanisms. Such an apparatus can often partly or wholly fail in any of a wide variety of ways. Sensors of various kinds are sometimes employed to at least attempt to detect such failures states.

### BRIEF DESCRIPTION OF DRAWINGS

Various needs are at least partially met through provision of the heat exchanger sensor processing method and apparatus described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 comprises a block diagram as configured in accordance with various embodiments of these teachings;
FIG. 2 comprises a flow diagram as configured in accordance with various embodiments of these teachings;
FIG. 3 comprises a flow diagram as configured in accordance with various embodiments of these teachings;
FIG. 4 comprises a block diagram as configured in accordance with various embodiments of these teachings;
FIG. 5 comprises a block diagram as configured in accordance with various embodiments of these teachings;
FIG. 6 comprises a block diagram as configured in accordance with various embodiments of these teachings; and
FIG. 7 comprises a block diagram as configured in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

There are at least two general approaches to processing sensor information corresponding to a given apparatus in a way that leads to corresponding corrective action. By the first approach, a (often significant) number of sensors are employed to monitor different sections and/or operating states of the apparatus. Enough sensors are employed to provide enough data to permit not only detecting a fault, but to determine a likely singular cause of the fault. A corresponding maintenance task can then be assigned. Unfortunately, the number of sensors required to enable this approach can greatly increase both initial and operating costs. In an aviation context, all those sensors can also potentially add unwanted weight to the aircraft, which has several negative impacts such as fuel consumption, fuel economy, weight distribution, and/or the like.

By a second approach, fewer (possibly very few) sensors are employed to monitor the apparatus. This approach can often serve to detect a fault condition, but offers little insight into the cause of the fault. This approach can therefore drive generic, more comprehensive, and burdensome troubleshooting activities to isolate the cause before a corresponding maintenance task can be assigned.

These are all significant challenges in the context of aviation application settings and elsewhere.

Generally speaking, the various aspects of the present disclosure can be employed by accessing sensor information from a plurality of sensors that monitor an apparatus and then inputting sensed information corresponding to the sensor information into a control circuit configured to output virtual parameters corresponding to the apparatus as a function, at least in part, of the sensed information, followed by determining a particular fault class from amongst a plurality of fault classes as a function, at least in part, of the virtual parameters and identifying at least one task regarding the apparatus corresponding to the particular fault class. In many application settings, this approach can operate using few sensors than would ordinarily be expected while also helping to better generally direct subsequent troubleshooting activity.

By one approach, the foregoing apparatus comprises at least a part of a gas turbine engine, such as a heat exchanger (though it will be understood that these teachings can readily be utilized in conjunction with any other of a wide variety of apparatuses).

By one approach, the apparatus includes various discrete sections of a gas turbine engine, such as a heat exchanger.

By one approach, the sensor information includes directly measurable physical parameters.

By one approach, the virtual parameters include parameters that are not directly measurable, and by one approach may even include at least some parameters that are dimensionless.

By one approach, the aforementioned control circuit is configured, at least in part, as a neural network. By one approach, that neural network is trained, at least in part, using data from other apparatuses that are not identical to the apparatus.

By one approach, at least some of the plurality of fault classes do not correspond to only an individual fault mode (or, to say this another way, at least some of the plurality of fault classes correspond to a plurality of individual fault modes). That said, by one approach, at least some of the plurality of fault classes that do not correspond to only an individual fault mode also have at least one shared task associated therewith.

By one approach, inputting the sensed information corresponding to the sensor information into the control circuit configured to output virtual parameters corresponding to the apparatus includes inputting both recently sensed information corresponding to the sensor information and historical sensed information corresponding to historical sensor information into the control circuit configured to output virtual parameters corresponding to the apparatus.

So configured, rather than isolating individual failure modes, these teachings will facilitate isolating to classes of failure modes or symptoms, where, for example, each class might have a shared or common maintenance action associated with it. In this way, failure can be verified and/or partially isolated to drive further maintenance actions with only a reduced maintenance effort being necessarily put into that troubleshooting activity.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

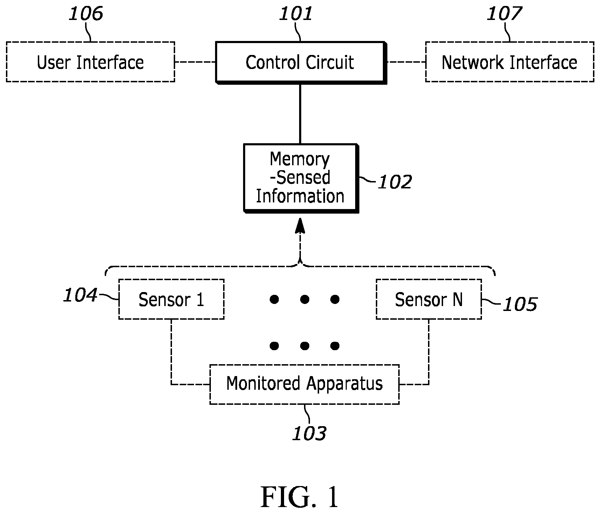

The foregoing and other benefits may become clearer upon making a thorough review and study of the following detailed description. Referring now to the drawings, and in particular to FIG. 1, an illustrative application setting that is compatible with many of these teachings will be presented.

In this particular example, the enabling apparatus includes a control circuit 101. Being a "circuit," the control circuit 101 therefore includes structure that includes at least one (and typically a plurality) electrically-conductive paths (such as paths comprised of a conductive metal such as copper or silver) that convey electricity in an ordered manner, which path(s) will also typically include corresponding electrical components (both passive (such as resistors and capacitors) and active (such as any of a variety of semiconductor-based devices) as appropriate) to permit the circuit to effect the control aspect of these teachings.

Such a control circuit 101 can include a fixed-purpose hard-wired hardware platform (including but not limited to an application-specific integrated circuit (ASIC) (which is an integrated circuit that is customized by design for a particular use, rather than intended for general-purpose use), a field-programmable gate array (FPGA), and the like) or can include a partially or wholly-programmable hardware platform (including but not limited to microcontrollers, microprocessors, and the like). These architectural options for such structures are well known and understood in the art and require no further description here. This control circuit 101 is configured (for example, by using corresponding programming as will be well understood by those skilled in the art) to carry out one or more of the steps, actions, and/or functions described herein.

The control circuit 101 operably couples to a memory 102. This memory 102 may be integral to the control circuit 101 or can be physically discrete (in whole or in part) from the control circuit 101 as desired. This memory 102 can also be local with respect to the control circuit 101 (where, for example, both share a common circuit board, chassis, power supply, and/or housing) or can be partially or wholly remote with respect to the control circuit 101 (where, for example, the memory 102 is physically located in another facility, metropolitan area, or even country as compared to the control circuit 101).

In addition to information such as the sensed information described herein, this memory 102 can serve, for example, to non-transitorily store the computer instructions that, when executed by the control circuit 101, cause the control circuit 101 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as a dynamic random access memory (DRAM).)

In this example, the memory 102 has stored therein sensed information corresponding to sensor information from a plurality of sensors (illustrated as sensor 1 104 through sensor N 105 (where "N" is a positive integer greater than 1) that monitor a monitored apparatus 103. These teachings will accommodate any of a variety of sensors, including, for example, temperature sensors, pressure sensors, velocity and acceleration sensors, force sensors, active sensors (using, for example, energy such as emitted light or sound), visual and/or sonic sensors, and so forth.

These teachings will also accommodate any of a wide variety of apparatuses. As a general example, the apparatus may comprise a gas turbine engine, at least a part of a gas turbine engine, and/or various discrete sections of a gas turbine engine.

As a more specific example, the apparatus may comprise an aircraft propulsion system heat exchanger.

For the sake of an illustrative example, the number of sensors in FIG. 1 can be insufficient to uniquely identify every failure mode of the monitored apparatus 103. For example, the number of sensors may be insufficient to uniquely identify every expected failure mode of a monitored aircraft propulsion system heat exchanger. For example, failure modes for an aircraft propulsion system heat exchanger can include fouling (such as an accumulation of debris, dust, or other contaminants on the heat exchange surfaces, leading to reduced heat transfer efficiency and potential blockages, corrosion (caused, for example, by chemical or electrochemical reactions, sometimes exacerbated by the presence of moisture and contaminants, that can lead to material degradation and eventual failure of heat exchanger surfaces), erosion (caused, for example, by highvelocity fluid flow, especially when the fluid contains particulates, that can wear away material from heat exchanger surfaces over time), thermal fatigue (caused, for example, by repeated thermal cycling that can lead to expansion and contraction of heat exchanger materials, causing stress and eventually leading to cracks and material failure), mechanical fatigue (caused, for example, by vibration and other mechanical stresses that can lead to fatigue in the heat exchanger materials, causing cracks and potential ruptures), overheating (caused, for example, by insufficient cooling or excessive heat loads that can cause temperatures to rise beyond design limits, potentially leading to material deformation or failure), creep (caused, for example, by prolonged exposure to high temperatures that can cause permanent deformation of the heat exchanger materials and that can lead to leaks or structural failure), clogging (caused, for example, by small passages within the heat exchanger that can become clogged with debris or sediment, impeding fluid flow and reducing heat transfer efficiency), leaks (caused, for example, by seals and joints that can degrade over time, leading to leaks of the working fluids and which can compromise system performance and safety), flow-induced vibration (caused, for example, by unsteady fluid flow that can induce vibrations that may lead to fatigue or resonance issues in the heat exchanger structure), freeze damage (caused, for example, when a heat exchanger is exposed to temperatures below the freezing point of the working fluid and when not adequately drained or protected, ice formation can cause physical damage due to expansion), material incompatibility (where the use of incompatible materials for the fluids being exchanged can lead to chemical reactions, corrosion, and other forms of degradation), manufacturing defects (where flaws introduced during the manufacturing process, such as improper welding, can lead to weak points that may fail under operational stresses), design flaws (where inadequate design, such as insufficient heat transfer area or improper flow paths, can result in poor performance and increased susceptibility to failure), and external damage (caused, for example, by impact with foreign objects or damage during maintenance activities that can compromise the integrity of the heat exchanger). It can be cost prohibitive or otherwise impractical (or even impossible) to provide sensors to directly monitor and account for each and every one of these failure modes.

The aforementioned sensors 104, 105 can, for example, be configured and/or located to sense any of a variety of different monitored apparatus conditions and/or operating states. Generally speaking, by one approach the sensor information includes directly measurable physical parameters. For example, when the monitored apparatus 103 comprises an aircraft propulsion system heat exchanger, the sensor information may represent such things as at least one heat exchanger fluid flow, at least one heat exchanger temperature, and at least one heat exchanger pressure.

By one optional approach, the control circuit 101 also operably couples to a user interface 106. This user interface 106 can include any of a variety of user-input mechanisms (such as, but not limited to, keyboards and keypads, cursor-control devices, touch-sensitive displays, speech-recognition interfaces, gesture-recognition interfaces, and so forth) and/or user-output mechanisms (such as, but not limited to, visual displays, audio transducers, printers, and so forth) to facilitate receiving information and/or instructions from a user and/or providing information to a user.

If desired, the control circuit 101 can also operably couple to an optional network interface 107. So configured the control circuit 101 can communicate with other elements (both within the apparatus 100 and external thereto) via the network interface 107. Network interfaces, including both wireless and non-wireless platforms, are well understood in the art and require no particular elaboration here.

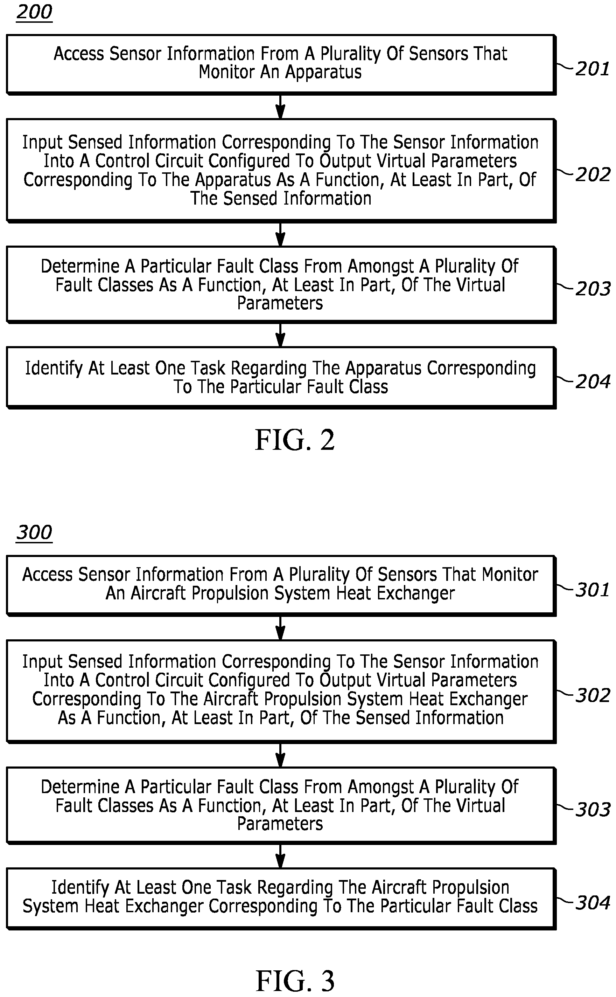

Referring now to FIG. 2, a process 200 that can be carried out, for example, in conjunction with the above-described application setting (and more particularly via the aforementioned control circuit 101) will be described. Generally speaking, this process 200 serves to facilitate identifying one or more diagnostic and/or maintenance tasks regarding the monitored apparatus 103 that correspond to a particular fault class.

At block 201, this process 200 provides for the control circuit 101 accessing sensor information from a plurality of sensors 105, 105 that monitor an apparatus 103. This activity may comprise, for example, accessing the aforementioned memory 102. The accessed information may be current (e.g., real-time or near real-time) and/or may be historical. When the accessed information comprises historical information, the information may include, for example, a batch of readings from each of the plurality of sensors 104, 105 over a given period of time.

At block 202, the control circuit 101 inputs the accessed sensed information corresponding to the sensor information into a control circuit (which may be the aforementioned control circuit 101 itself) that is configured to output virtual parameters corresponding to the apparatus 103 as a function, at least in part, of the sensed information. One or more of those virtual parameters may comprise parameters that are not directly measurable in the given application setting and/or which may be dimensionless. (A dimensionless parameter can comprise, for example, a number quantity without any physical units and which is therefore a pure number. Such parameters can be used, for example, to describe the relationship between different physical quantities in a system. One example in these regards is the Reynolds number (Re), which is used in fluid mechanics to characterize the flow of fluids.) By one approach, a virtual parameter may comprise a real-world physical parameter that could theoretically be directly sensed but which, for whatever reason, is not being sensed in the present application setting. For example, consider air flow rate. There are flow rate sensors that can provide a measured real-world physical parameter for flow rate.

When a given application setting does not include such a sensor, however, this parameter could be estimated from other sensor values and that estimated value used herein as a virtual parameter. As one example, differential pressure sensors may be used across a restriction, such as an orifice plate, Venturi tube, or nozzle. The pressure difference between the upstream and downstream points is related to the flow velocity due to the Bernoulli principle. A flow rate can then be calculated using the geometry of the restriction and the measured pressure differential. As another example, acoustic sensors can detect noise or vibrations induced by the flow of fluid through a given pathway. The characteristics of the noise or vibrations can provide information about the flow rate. As yet another example, strain gauges attached to portions of the fluidic pathway can measure deformation that is due to the pressure of the fluid flow. This deformation can be correlated with the flow rate, assuming the material properties and geometry of the pathway are known.

These teachings will also accommodate using a virtual parameter where the parameter itself is not ordinarily measurable by any available sensor. For example, combustor efficiency in a jet turbine engine is a physical characteristic that cannot presently be directly sensed. While combustor efficiency can be viewed as being a physical characteristic of a combustor, lacking any corresponding efficiency sensor, these teachings will accommodate using a corresponding virtual parameter that is calculated or otherwise determined based upon whatever information may otherwise be available. (Combustor efficiency in a jet turbine engine refers to how effectively the combustor converts the energy content of the fuel into usable heat, which then drives the turbine. Several factors can influence combustor efficiency, and sensed or otherwise available information regarding such things as the air-fuel ratio, combustion temperatures, the duration of time the air-fuel mixture spends in the combustor, any drop in pressure as the air-fuel mixture flows through the combustor, cooling of the combustor walls, and/or levels of emissions might be leveraged to provide such a parameter.)

By one approach, inputting the sensed information corresponding to the sensor information into the control circuit can include inputting both recently sensed information corresponding to the sensor information and historical sensed information corresponding to historical sensor information.

At block 203, the control circuit determines a particular fault class from amongst a plurality of fault classes as a function, at least in part, of the aforementioned virtual parameters. This determination may also be based, at least in part, on some or all of the sensed information itself. By one approach, at least some of the plurality of fault classes do not each correspond to only an individual fault mode. For example, a first fault class may correspond to both a fault mode A and a fault mode B, and a second fault class may correspond to both a fault mode B and a fault mode C. In such a case, by one approach, at least some of the plurality of fault classes that do not correspond to only an individual fault mode nevertheless may have at least one shared task associated therewith. Continuing with the foregoing example, both the first and second fault classes may have a common shared task (such as, for example, conducting a water wash of a particular portion of the monitored apparatus, conducting a borescope inspection of the monitored apparatus, checking a particular sensor, checking a particular component of the monitored apparatus such as a bearing, and so forth).

At block 204, the control circuit identifies at least one task regarding the apparatus 103 corresponding to the aforementioned identified particular fault class. This identification can be accomplished by, for example, employing a look-up table to correlate specified tasks with corresponding fault classes. Those correlated tasks might be ordered by a prioritization that is based, for example, on user experience. By one approach, that identified task may comprise a diagnostic task to help isolate the cause of the fault and/or may comprise a specific maintenance task (such as, for example, replacing or repairing a particular component). If desired, that identified task or tasks may be communicated to a user via the aforementioned user interface 106 and/or via the aforementioned network interface 107.

As an illustrative example in the foregoing regards, the monitored apparatus 103 may be a bearing system in a jet turbine engine. There may be sensor information from two or more sensors, such as a vibration sensor, an oil debris sensor, and so forth. Signals from such sensors may be provided to one of or both of a frequency or time domain analysis circuit and/or directly to a fault isolation circuit.

These teachings will then provide for carrying out the at least one task regarding the apparatus (such as, for example, an aircraft propulsion system heat exchanger) to thereby remediate a fault with that apparatus. The at least one task may be carried out automatically when possible (for example, when uploading software to replace corrupted software can be done automatically) or by assignment to maintenance personnel who may also receive corresponding instructions regarding procedures to follow, tools to employ, parts to replace, testing to effect, and so forth.

These teachings are highly flexible in practice and will accommodate various modifications and/or supplemental features. As but one illustrative example in these regards, the aforementioned control circuit can be configured, at least in part, as a neural network that aids, in whole or in part, the above-described processing. In such a case, and by one approach, that neural network can be trained, at least in part, using data from other apparatuses that similar or identical to the monitored apparatus 103 and/or that are not identical to the monitored apparatus 103. For example, when the monitored apparatus is a jet turbine engine, experiential data gathered from other jet turbine engines that are slightly or even significantly different from the monitored apparatus may nevertheless be helpful training content. In such a case, experiential data from apparatuses besides other jet turbine engines may also be useful when the other apparatuses have some operating characteristic and/or application setting that nevertheless renders the experiential data useful in context for training such a neural network.

Referring now to FIG. 3, a more specific example in the foregoing regards will be presented. In this example, the process 300 serves to identify one or more tasks regarding an aircraft propulsion system heat exchanger, which task(s) corresponds to a particular fault class.

Pursuant to this process, at block 301, the control circuit accesses sensed information that corresponds to sensor information from a plurality of sensors that monitor an aircraft propulsion system heat exchanger. This example presumes that the plurality of sensors is insufficient to uniquely identify every failure mode of the aircraft propulsion system heat exchanger and that the sensor information comprises directly measurable physical parameters. As an illustrative example, the sensor information here represents at least one heat exchanger fluid flow, at least one heat exchanger temperature, and at least one heat exchanger pressure.

By one approach, the accessed sensor information may include both recently sensed information corresponding to the sensor information and historical sensed information corresponding to sensor information from the plurality of sensors.

At block 302, the control circuit outputs virtual parameters corresponding to the aircraft propulsion system heat exchanger as a function, at least in part, of the foregoing sensed information. As explained above, one or more of those virtual parameters may include parameters that are not directly measurable and may even be dimensionless.

At block 303, the control circuit determines a particular fault class from amongst a plurality of fault classes as a function, at least in part, of the virtual parameters. The control circuit, if desired, may also make this determination by taking into account the accessed sensor information as well. By one approach, and as explained above, at least some of the plurality of fault classes do not each correspond to only an individual fault mode, in which case, at least some of the plurality of fault classes that do not correspond to only an individual fault mode may have at least one shared task associated therewith.

At block 304, the control circuit identifies at least one task regarding the aircraft propulsion system heat exchanger that corresponds to the above-determined particular fault class. For example, in the case of a faulty heat exchanger, the foregoing approach might output tasks drawn from a corresponding look-up table that specify conducting a water wash, examining the component with a borescope, and checking the sensor to ensure its proper operation.

Those tasks can then be communicated as desired to appropriate service personnel and/or supervisors. These teachings will accommodate using any of a variety of communication modalities, including but not limited to populating a database, spreadsheet, or other approach that feeds a dashboard presentation system, push notifications and/or alerts from a proprietary or public system (such as private or public smartphone apps), text and/or so-called chat messages, facsimile transmissions, automatically-dialed synthesized text-to-voice voice messages, and so forth.

Further details that comport with these teachings will now be presented. It will be understood that the specific details of these examples are intended to serve an illustrative purpose and are not intended to suggest any particular limitations with respect to these teachings.

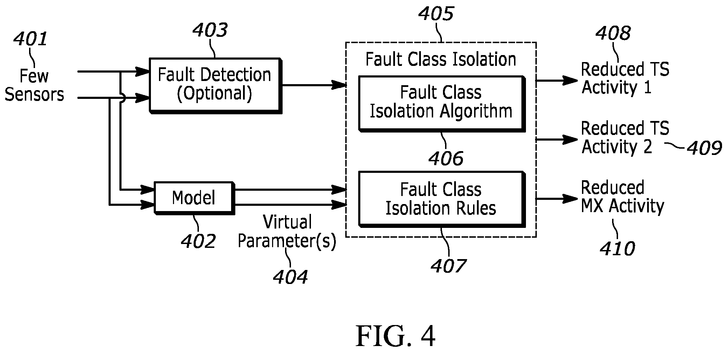

Referring to FIG. 4, this next example presumes the use of only a few sensors 401 such as, for example, from two to four sensors. At least some of the sensors may represent different sensor modalities in comparison to one another. The corresponding sensor information is input to a model 402 configured per the foregoing which outputs one or more virtual parameters 404. The latter are input to a fault class isolation circuit 405. By one optional approach, a fault detection circuit 403 also receives some or all of the sensor information and outputs fault detection information/signals to the fault class isolation circuit 405.

The fault class isolation circuit 405 can employ one or more fault class isolation algorithms 406 in conjunction with predetermined fault class isolation rules 407. Based upon sensor input that, in its totality, may otherwise not be sufficient to result in a more targeted troubleshooting/maintenance task, the fault class isolation circuit 405 outputs one or more activities, in this example two troubleshooting tasks 408 and 409 along with one maintenance task 410. By virtue of the ability of the fault class isolation circuit 405 to leverage the virtual parameters 404 to somewhat (though not fully) isolate the cause of a fault condition, these activities/tasks are likely to require effort/time that is reduced from what would ordinarily be expected when using only a minimal set of sensors 401.

In practice, the adaptation of this approach to fault isolation to a new apparatus, such as a new gas turbine engine or engine component, may require customization, and may likely be coupled with the virtual parameters 404 that are derived from the model 402. The fault class isolation circuit 405 may assume different forms based on the monitored apparatus in question and the sensor data that is available. It can be helpful when the physics of the apparatus are well defined and a corresponding model 402 is readily derived that can yield physically meaningful virtual parameters 404.

Generally speaking, this approach considers failure modes in groups or classes, rather than individually. The virtual parameter(s) are calculated that correspond to these classes or groupings of faults. These classes of faults can be used to drive targeted maintenance or troubleshooting activities and thereby avoid broad, generic troubleshooting that tends to characterize the use of only a few sensors that are not sufficient, in and of themselves, to more specifically identify/localize a particular issue. This approach therefore tends to lead to a reduced maintenance burden and/or a reduced amount of maintenance time.

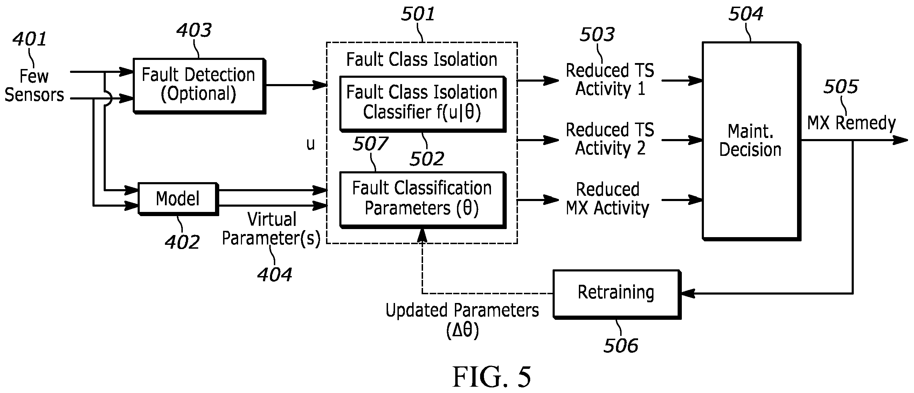

Referring to FIG. 5, this example again presumes the use of only a few sensors 401 as described above. In this example, a model 402 (and, optionally, a fault detection circuit 403) receives the sensor information and provides corresponding virtual parameters 404 (and fault detection signals from the fault detection circuit 403) to a fault class isolation circuit 501. In this case, the latter includes a fault class isolation classifier circuit (*f*(*u*|Θ)) 502 and fault classification parameters (Θ) 507. The fault class isolation circuit 501 again outputs activities that help to target useful troubleshooting and/or maintenance actions 503. In this example, after the appropriate maintenance function 504 identifies the appropriate maintenance remedy, information regarding that remedy 505 can serve as retraining content 506 that leads to updating the fault classification parameters 507.

This approach can be useful in a situation where there are no initially available clearly useful models and/or there is no clear discrimination from initially defined virtual parameters. Given that situation, the fault class isolation circuit 501 can be developed over time based on the described feedback data. Over time, the maintenance remedies 505 that are taken can be mapped to specific signatures in the sensed and virtual parameters, and this data set can be used to update the fault classification parameters 507 that inform the structural rules (e.g., for a neural network) that perform the classification of the data. Note that, when data is available from other sources (e.g., engine test or modeling), training in those regards could be performed to initialize the fault classification parameters 507 of the fault class isolation circuit 501.

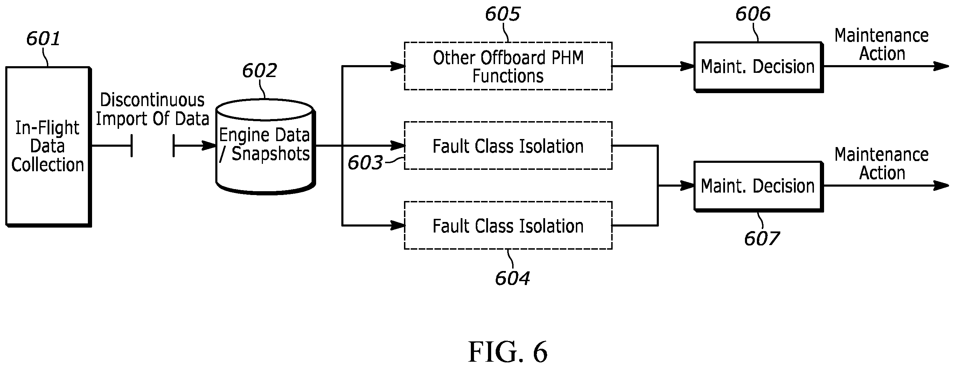

Referring to FIG. 6, in this example collected in-flight data 601 is discontinuously imported to a database 602 containing aircraft engine data snapshots. (By one approach, the data could be taken from the aircraft in a streaming and/or event-driven manner.) The contents of the database 602 are, in turn, input to each of a first fault class isolation circuit 603, a second fault class isolation circuit 604, and a third circuit 605 that addresses other offboard PHM functions (where "PHM" refers to predictive health monitoring, which pertains to predicting potential failures or issues before they occur to thereby allow for proactive maintenance and reducing unplanned downtime).

In this example, the third circuit 605 provides its own output to drive a maintenance decision 606 that leads to a corresponding maintenance action. The first fault class isolation circuit 603 and the (optional) second fault class isolation circuit 604 provide their outputs to inform a separate maintenance decision 607 that leads to its own corresponding maintenance action. (Two fault class isolation circuits are illustrated in this figure to make the point that these teachings are readily able to have as many different fault isolation circuits as may be desired in order to permit the mechanism to analyze and act on more than one type of fault class. By way of example, a jet turbine engine heat exchanger may itself have a plurality of different ways of failing, and each such failure mode could be represented as a separate and different fault class. Each fault class isolation model can be designed to evaluate a separate fault class, and potentially ultimately lead to a recommended maintenance action that differs from other fault classes.)

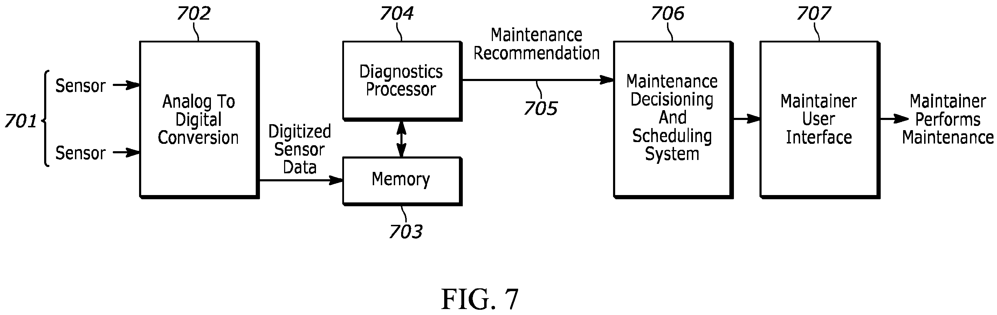

Referring to FIG. 7, in this example, the analog outputs of two sensors 701 couple to an analog-to-digital converter 702. The resultant digitized sensor data is input to a memory 703 that is accessed by a diagnostics processor circuit 704. The latter produces a corresponding maintenance recommendation 705 in accordance with the foregoing teachings that is output to a maintenance decisioning and scheduling system 706. The maintenance decisioning and scheduling system 706 in turn provides maintenance decisions (using, for example, a look-up table that correlates maintenance tasks to corresponding diagnostic results) and corresponding maintenance schedules (automatically developed, for example, using scheduling functionality offered by various third party platforms) to a user interface (referred to in this figure as a maintainer user interface 707) to thereby inform and instruct maintenance personnel regarding the specific maintenance actions to be undertaken.

Further aspects of the disclosure are provided by the subject matter of the following clauses:
Clause 1. A method comprising: accessing sensor information from a plurality of sensors that monitor an apparatus; inputting sensed information corresponding to the sensor information into a control circuit configured to output virtual parameters corresponding to the apparatus as a function, at least in part, of the sensed information; determining a particular fault class from amongst a plurality of fault classes as a function, at least in part, of the virtual parameters; identifying at least one task regarding the apparatus corresponding to the particular fault class.
Clause 2. The method of any preceding clause wherein the apparatus comprises at least a part of a gas turbine engine.
Clause 3. The method of any preceding clause wherein the apparatus comprises various discrete sections of a gas turbine engine.
Clause 4. The method of any preceding clause wherein the sensor information comprises directly measurable physical parameters.
Clause 5. The method of any preceding clause wherein the virtual parameters comprise parameters that are not directly measurable.
Clause 6. The method of any preceding clause wherein the virtual parameters include at least some parameters that are dimensionless.
Clause 7. The method of any preceding clause wherein the control circuit is configured, at least in part, as a neural network.
Clause 8. The method of any preceding clause wherein the neural network is trained, at least in part, using data from other apparatuses that are not identical to the apparatus.
Clause 9. The method of any preceding clause wherein at least some of the plurality of fault classes do not correspond to only an individual fault mode.
Clause 10. The method of any preceding clause wherein at least some of the plurality of fault classes that do not correspond to only an individual fault mode have at least one shared task associated therewith.
Clause 11. The method of any preceding clause wherein inputting the sensed information corresponding to the sensor information into the control circuit configured to output virtual parameters corresponding to the apparatus comprises inputting both recently sensed information corresponding to the sensor information and historical sensed information corresponding to historical sensor information into the control circuit configured to output virtual parameters corresponding to the apparatus.
Clause 12. An apparatus comprising: a memory having sensed information corresponding to sensor information from a plurality of sensors that monitor a monitored apparatus stored therein; a control circuit configured to: access the sensed information as input; output virtual parameters corresponding to the monitored apparatus as a function, at least in part, of the sensed information; determine a particular fault class from amongst a plurality of fault classes as a function, at least in part, of the virtual parameters; and identify tasks regarding the monitored apparatus corresponding to the particular fault class.
Clause 13. The apparatus of any preceding clause wherein the monitored apparatus comprises at least a part of a gas turbine engine.
Clause 14. The apparatus of any preceding clause wherein the apparatus comprises various discrete sections of a gas turbine engine.
Clause 15. The apparatus of any preceding clause wherein the sensor information comprises directly measurable physical parameters.
Clause 16. The apparatus of any preceding clause wherein the virtual parameters comprise parameters that are not directly measurable.
Clause 17. The apparatus of any preceding clause wherein the virtual parameters include at least some parameters that are dimensionless.
Clause 18. The apparatus of any preceding clause wherein the control circuit is configured, at least in part, as a neural network.
Clause 19. The apparatus of any preceding clause wherein the neural network is trained, at least in part, using data from other apparatuses that are not identical to the monitored apparatus.
Clause 20. The apparatus of any preceding clause wherein at least some of the plurality of fault classes do not correspond to only an individual fault mode.
Clause 21. The apparatus of any preceding clause wherein at least some of the plurality of fault classes that do not correspond to only an individual fault mode have at least one shared task associated therewith.
Clause 22. The apparatus of any preceding clause wherein: the memory also has historical sensed information corresponding to historical sensor information from the plurality of sensors that monitor the monitored apparatus stored therein; and the control circuit is further configured to: access the historical sensed information as additional input; and output the virtual parameters corresponding to the monitored apparatus as a function, at least in part, of both the sensed information and the historical sensed information.
Clause 23. A method comprising: accessing sensor information from a plurality of sensors that monitor an aircraft propulsion system heat exchanger; inputting sensed information corresponding to the sensor information into a control circuit configured to output virtual parameters corresponding to the aircraft propulsion system heat exchanger as a function, at least in part, of the sensed information; determining a particular fault class from amongst a plurality of fault classes as a function, at least in part, of the virtual parameters; identifying at least one task regarding the aircraft propulsion system heat exchanger corresponding to the particular fault class.
Clause 24. The method of any preceding clause wherein the plurality of sensors is insufficient to uniquely identify every failure mode of the aircraft propulsion system heat exchanger.
Clause 25. The method of any preceding clause wherein the sensor information represents at least one heat exchanger fluid flow, at least one heat exchanger temperature, and at least one heat exchanger pressure.
Clause 26. The method of any preceding clause wherein the sensor information comprises directly measurable physical parameters.
Clause 27. The method of any preceding clause wherein the virtual parameters comprise parameters that are not directly measurable.
Clause 28. The method of any preceding clause wherein the virtual parameters include at least some parameters that are dimensionless.
Clause 29. The method of any preceding clause wherein the control circuit is configured, at least in part, as a neural network.
Clause 30. The method of any preceding clause wherein the neural network is trained, at least in part, using data from other aircraft propulsion system heat exchangers that are not identical to the aircraft propulsion system heat exchanger.
Clause 31. The method of any preceding clause wherein at least some of the plurality of fault classes do not correspond to only an individual fault mode.
Clause 32. The method of any preceding clause wherein at least some of the plurality of fault classes that do not correspond to only an individual fault mode have at least one shared task associated therewith.
Clause 33. The method of any preceding clause wherein inputting the sensed information corresponding to the sensor information into the control circuit configured to output virtual parameters corresponding to the aircraft propulsion system heat exchanger comprises inputting both recently sensed information corresponding to the sensor information and historical sensed information corresponding to historical sensor information into the control circuit configured to output virtual parameters corresponding to the aircraft propulsion system heat exchanger.
Clause 34. An apparatus comprising: a control circuit configured to: access sensed information corresponding to sensor information from a plurality of sensors that monitor an aircraft propulsion system heat exchanger; output virtual parameters corresponding to the aircraft propulsion system heat exchanger as a function, at least in part, of the sensed information; determine a particular fault class from amongst a plurality of fault classes as a function, at least in part, of the virtual parameters; identify at least one task regarding the aircraft propulsion system heat exchanger corresponding to the particular fault class.
Clause 35. The apparatus of any preceding clause wherein the plurality of sensors is insufficient to uniquely identify every failure mode of the aircraft propulsion system heat exchanger.
Clause 36. The apparatus of any preceding clause wherein the sensor information represents at least one heat exchanger fluid flow, at least one heat exchanger temperature, and at least one heat exchanger pressure.
Clause 37. The apparatus of any preceding clause wherein the sensor information comprises directly measurable physical parameters.
Clause 38. The apparatus of any preceding clause wherein the virtual parameters comprise parameters that are not directly measurable.
Clause 39. The apparatus of any preceding clause wherein the virtual parameters include at least some parameters that are dimensionless.
Clause 40. The apparatus of any preceding clause wherein the control circuit is configured, at least in part, as a neural network.
Clause 41. The apparatus of any preceding clause wherein the neural network is trained, at least in part, using data from other aircraft propulsion system heat exchangers that are not identical to the aircraft propulsion system heat exchanger.
Clause 42. The apparatus of any preceding clause wherein at least some of the plurality of fault classes do not correspond to only an individual fault mode.
Clause 43. The apparatus of any preceding clause wherein at least some of the plurality of fault classes that do not correspond to only an individual fault mode have at least one shared task associated therewith.
Clause 44. The apparatus of any preceding clause wherein the control circuit is configured to access the sensed information corresponding to the sensor information by accessing both recently sensed information corresponding to the sensor information and historical sensed information corresponding to sensor information from the plurality of sensors.
Clause 45. A method, comprising: accessing sensor information from a plurality of sensors that monitor an aircraft propulsion system heat exchanger; inputting sensed information corresponding to the sensor information into a control circuit configured to output virtual parameters corresponding to the aircraft propulsion system heat exchanger as a first function, at least in part, of the sensed information; determining a particular fault class from amongst a plurality of fault classes as a second function, at least in part, of the virtual parameters; identifying at least one task regarding the aircraft propulsion system heat exchanger corresponding to the particular fault class; and carrying out the at least one task regarding the aircraft propulsion system heat exchanger to thereby remediate a fault with the aircraft propulsion system heat exchanger.
Clause 46. The method of any preceding clause, wherein the plurality of sensors is insufficient to uniquely identify every failure mode of the aircraft propulsion system heat exchanger.
Clause 47. The method of any preceding clause, wherein the sensor information represents at least one heat exchanger fluid flow, at least one heat exchanger temperature, and at least one heat exchanger pressure.
Clause 48. The method of any preceding clause, wherein the sensor information comprises directly measurable physical parameters.
Clause 49. The method of any preceding clause, wherein the virtual parameters comprise parameters that are not directly measurable.
Clause 50. The method of any preceding clause, wherein the virtual parameters include at least some parameters that are dimensionless.
Clause 51. The method of any preceding clause, wherein the control circuit is configured, at least in part, as a neural network.
Clause 52. The method of any preceding clause, wherein the neural network is trained, at least in part, using data from other aircraft propulsion system heat exchangers that are not identical to the aircraft propulsion system heat exchanger.
Clause 53. The method of any preceding clause, wherein at least some of the plurality of fault classes: correspond to a plurality of individual fault modes; and have at least one shared task associated therewith.
Clause 54. The method of any preceding clause, wherein inputting the sensed information corresponding to the sensor information into the control circuit configured to output virtual parameters corresponding to the aircraft propulsion system heat exchanger comprises inputting both recently sensed information corresponding to the sensor information and historical sensed information corresponding to historical sensor information into the control circuit configured to output virtual parameters corresponding to the aircraft propulsion system heat exchanger.
Clause 55. An apparatus, comprising: a control circuit configured to: access sensed information corresponding to sensor information from a plurality of sensors that monitor an aircraft propulsion system heat exchanger; output virtual parameters corresponding to the aircraft propulsion system heat exchanger as a first function, at least in part, of the sensed information; determine a particular fault class from amongst a plurality of fault classes as a second function, at least in part, of the virtual parameters; and identify at least one task regarding the aircraft propulsion system heat exchanger corresponding to the particular fault class.
Clause 56. The apparatus of any preceding clause, wherein the plurality of sensors is insufficient to uniquely identify every failure mode of the aircraft propulsion system heat exchanger.
Clause 57. The apparatus of any preceding clause, wherein the sensor information represents at least one heat exchanger fluid flow, at least one heat exchanger temperature, and at least one heat exchanger pressure.
Clause 58. The apparatus of any preceding clause, wherein the sensor information comprises directly measurable physical parameters.
Clause 59. The apparatus of any preceding clause, wherein the virtual parameters comprise parameters that are not directly measurable.
Clause 60. The apparatus of any preceding clause, wherein the virtual parameters include at least some parameters that are dimensionless.
Clause 61. The apparatus of any preceding clause, wherein the control circuit is configured, at least in part, as a neural network.
Clause 62. The apparatus of any preceding clause, wherein the neural network is trained, at least in part, using data from other aircraft propulsion system heat exchangers that are not identical to the aircraft propulsion system heat exchanger.
Clause 63. The apparatus of any preceding clause, wherein at least some of the plurality of fault classes each correspond to a plurality of individual fault modes.
Clause 64. The apparatus of any preceding clause, wherein at least some of the plurality of fault classes that each correspond to a plurality of the individual fault modes also each have at least one shared task associated therewith.

## Claims

1. A method comprising:
accessing sensor information from a plurality of sensors (105) that monitor an aircraft propulsion system heat exchanger (103);
inputting sensed information corresponding to the sensor information into a control circuit (101) configured to output virtual parameters (404) corresponding to the aircraft propulsion system heat exchanger (103) as a first function, at least in part, of the sensed information;
determining a particular fault class from amongst a plurality of fault classes as a second function, at least in part, of the virtual parameters (404);
identifying at least one task regarding the aircraft propulsion system heat exchanger (103) corresponding to the particular fault class;
carrying out the at least one task regarding the aircraft propulsion system heat exchanger to thereby remediate a fault with the aircraft propulsion system heat exchanger.

2. An apparatus (100) comprising:
a control circuit (101) configured to:
access sensed information corresponding to sensor information from a plurality of sensors (105) that monitor an aircraft propulsion system heat exchanger (103);
output virtual parameters (404) corresponding to the aircraft propulsion system heat exchanger (103) as a first function, at least in part, of the sensed information;
determine a particular fault class from amongst a plurality of fault classes as a second function, at least in part, of the virtual parameters (404); and
identify at least one task regarding the aircraft propulsion system heat exchanger (103) corresponding to the particular fault class.

3. Any of the foregoing claims wherein the plurality of sensors (105) is insufficient to uniquely identify every failure mode of the aircraft propulsion system heat exchanger (103).

4. Any of the foregoing claims wherein the sensor information represents at least one heat exchanger fluid flow, at least one heat exchanger temperature, and at least one heat exchanger pressure.

5. Any of the foregoing claims wherein the sensor information comprises directly measurable physical parameters.

6. Any of the foregoing claims wherein the virtual parameters (404) comprise parameters that are not directly measurable.

7. Claim 6 wherein the virtual parameters (404) include at least some parameters that are dimensionless.

8. Any of the foregoing claims wherein the control circuit (101) is configured, at least in part, as a neural network.

9. Claim 8 wherein the neural network is trained, at least in part, using data from other aircraft propulsion system heat exchangers that are not identical to the aircraft propulsion system heat exchanger (103).

10. Any of the foregoing claims wherein at least some of the plurality of fault classes do not correspond to only an individual fault mode.

11. Claim 10 wherein at least some of the plurality of fault classes correspond to a plurality of individual fault modes and have at least one shared task associated therewith.

12. Any of the foregoing claims wherein inputting the sensed information corresponding to the sensor information into the control circuit (101) configured to output virtual parameters (404) corresponding to the aircraft propulsion system heat exchanger (103) comprises inputting both recently sensed information corresponding to the sensor information and historical sensed information corresponding to historical sensor information into the control circuit (101) configured to output virtual parameters (404) corresponding to the aircraft propulsion system heat exchanger (103).
